# EUROPÄISCHE PATENTANMELDUNG

(11) **EP 0 753 404 A2**
(43) Veröffentlichungstag der Anmeldung: **15.01.1997**
(21) Anmeldenummer: 96111050.9
(22) Anmeldetag: 09.07.1996
(51) Int. Cl.: B32B 27/32, D06N 7/00

(54) **Verfahren zur Herstellung mehrlagiger Stoffe unter Verwendung eines Haftvermittlers**

(30) Priorität: 11.07.1995 DE 19525250
(71) Anmelder: BASF AKTIENGESELLSCHAFT, 67056 Ludwigshafen (DE)
(72) Erfinder: Butterfass, Dieter, 67459 Böhl-Iggelheim (DE); Mori, Guy Frederic, 67300 Schiltigheim (FR); Olfermann, Kai, 67657 Kaiserslautern (DE)
(74) Vertreter: Bardehle, Heinz, Dipl.-Ing.

(57) **Zusammenfassung**

Verwendung eines Copolymerisats, bestehend in polymerisierter Form aus
a) 70 bis 90 Gew.-% mindestens eines C₂- bis C₄-Olefins und
b) 10 bis 30 Gew.-% mindestens eines Monomers aus folgender Gruppe: α,β-monoethylenisch ungesättigte C₃- bis C₈- Monocarbonsäuren, α,β-monoethylenisch ungesättigte C₄- bis C₈- Dicarbonsäuren und Anhydriden dieser Mono- und Dicarbonsäuren,
als Haftvermittler zwischen einem ersten und einem zweiten Material, wobei das erste Material höchstens zu 70 Gew.-% aus mindestens einem C₂- bis C₄-Olefin in polymerisierter Form und
das zweite Material mindestens zu 70 Gew.-% aus mindestens einem C₂- bis C₄-Olefin in polymerisierter Form besteht.

## Beschreibung

In vielen Bereichen der Technik besteht das Problem mehrere ausgedehnte Lagen unterschiedlicher Materialien übereinander anzuordnen und dauerhaft miteinander zu verbinden. Diese Aufgabe stellt sich insbesondere bei der Herstellung von Bodenbelägen aus mehreren Lagen.

Dementsprechend bezieht sich die Erfindung auf ein Verfahren zur Herstellung mehrlagiger Stoffe unter Verwendung eines Haftvermittlers zwischen zwei zu verbindenden Schichten und auf die Verwendung bestimmter Haftvermittler. Schließlich bezieht sich die Erfindung auf Bodenbeläge mit entsprechend verbundenen Lagen.

Die Problemstellung der Erfindung soll im Folgenden anhand der Herstellung von Tufting-Teppichen erläutert werden. Bei der Fertigung von Tufting-Teppichen wird ein Faden oder Fadenstrang durch ein Trägergewebe getuftet, d.h. gezogen, und anschließend durch Aufbringen eines Bindemittels in dem Trägermaterial fixiert. Dieses Bindemittel enthält in der Regel Polymerisate, die einen erheblichen Anteil an Copolymeren aus Butadien-Styrol, Butadien-Acrylnitril, Butadien-Acrylnitril-Styrol, (Meth)acrylsäureester-Styrol, (Meth)acrylsäureester-Vinylacetat, Methacrylsäureester-Acrylsäureester, (Meth)acrylsäureester-Styrol-Acrilnitril, Ethylen-Vinylacetat oder auch Polyurethane enthalten. Das Bindemittel wird vorzugsweise als wäßrige Dispersion auf das Trägermaterial aufgestrichen und anschließend getrocknet.

Um den Federungskomfort sowie die Wärme- und Schallisolierung der Teppiche zu verbessern, wird regelmäßig eine Textillage auf einen vorgefertigten textilen Belag aufkaschiert, d.h. aufgeklebt. Zu diesem Zweck wird häufig Polyethylen in Pulverform auf das Bindemittel aufgebracht und anschließend aufgeschmolzen. Das Polyethylen haftet in der Regel gut auf der Textillage, jedoch ist die Bindung an das Bindemittel in vielen Fällen völlig unzureichend. Dies macht sich vor allem bei hoch belasteten Bodenbelägen durch Ablösen von Rückenteilen negativ bemerkbar.

Die Herstellung von Tufting-Teppichen wird ausführlich in DE 41 11 455 und DE 41 40 580 und in EP 538 625, EP 547 533 und EP 595 063 beschrieben. EP 595 063 schlägt als Kaschierkleber zur Verbindung des Textilrückens mit der Trägerschicht einen Polyamid-haltigen Kaschierkleber mit unverschmolzenen Fasern vor. Dabei wird aber vorrangig eine verbesserte Recyclingfähigkeit des aus verschiedenen Materialien hergestellten Teppichs angestrebt. Als echte Haftvermittler zwischen getuftetem Trägermaterial und Rücken nennt US 5,332,773 Mischungen, die unter anderem Ethylen-Vinylacetat-Copolymere enthalten. Die vorgeschlagenen Kaschiermittel oder Haftvermittler erfüllen jedoch die an hoch belastete Bodenbeläge gestellten Anforderungen nur unzureichend.

Ähnliche Probleme wie bei Tufting-Teppichen bestehen auch bei Nadelvlies-Bodenbelägen. Die Haftung zwischen dem Trägermaterial und der häufig stark Polyolefin-haltigen oder mit einer Polyethylenschicht versehenen Bodenschicht ist ebenfalls in der Regel völlig ungenügend.

Derartige Haftungsprobleme treten auch bei anderen technischen Anwendungen auf, bei denen entsprechende zusammengesetzte Lagen dauerhaft verbunden werden müssen.

Aufgabe der vorliegenden Erfindung ist deshalb die Bereitstellung eines Verfahrens zur Herstellung mehrlagiger Stoffe, insbesondere Teppiche, wobei mindestens eine Lage Polyolefin-haltig ist, mit Hilfe eines Haftvermittlers. Insbesondere soll auch ein Haftvermittler für die dauerhafte Verbindung von Polyethylen und Lagen, die Copolymere aus Butadien-Styrol, Acrylsäureester-Styrol, Butadien-Acrylnitril, Acrylsäureester-Vinylacetat, Methacrylsäureester-Acrylsäureester oder Polyurethan enthalten, bereitgestellt werden. Eine weitere Aufgabe ist die Bereitstellung von Bodenbelägen mit guter Haftung der Lagen aneinander.

Die gestellte Aufgabe wird durch die in den Ansprüchen angegebene Verwendung eines bestimmten Copolymerisats als Haftvermittler gelöst.

Dabei wird ein Copolymerisat, das in polymerisierter Form besteht aus
a) 70 bis 90 Gew.-% mindestens eines C₂- bis C₄-Olefins und
b) 10 bis 30 Gew.-% mindestens eines Monomeren aus folgender Gruppe: α,β-monoethylenisch ungesättigte C₃- bis C₈- Monocarbonsäuren, α,β-monoethylenisch ungesättigte C₄- bis C₈- Dicarbonsäuren und Anhydride dieser Mono- und Dicarbonsäuren,
als Haftvermittler zwischen einem ersten und einem zweiten Material verwendet, wobei das erste Material höchstens zu 70 Gew.-% aus mindestens einem C₂- bis C₄-Olefin in polymerisierter Form und das zweite Material mindestens zu 70 Gew.-% aus mindestens einem C₂- bis C₄-Olefin in polymerisierter Form besteht.

Bevorzugte Olefinmonomere für die Komponente a) sind Ethylen und/oder Propylen, sowie Gemische von C₂- bis C₄-Olefinen mit anderen Olefinen, insbesondere Gemische aus Ethylen mit bis zu 10 mol-% höheren Monoolefinen, wie z.B. Hexen oder Octen.

Vorzugsweise wird ein Copolymerisat verwendet, bei dem mindestens ein Monomer b) aus folgender Gruppe ausgewählt ist: α,β-monoethylenisch ungesättigte C₃- bis C₅- Monocarbonsäuren, α,β-monoethylenisch ungesättigte C₄- bis C₅- Dicarbonsäuren und Anhydride dieser Mono- und Dicarbonsäuren. Weiter bevorzugt ist ein Monomer b) aus folgender Gruppe ausgewählt: Acrylsäure, Maleinsäure und deren Anhydrid. Besonders bevorzugte Copolymerisate sind Ethylen-Acrylsäure-Copolymerisate.

Eine als Haftvermittler im Rahmen der vorliegenden Erfindung besonders geeignete Substanz ist die von BASF® unter den Handelsnamen Epotal® DS 4024 X und Poligen® WE 3 angebotene Polymerdispersion.

Bevorzugt verwendete Copolymerisate weisen ein gewichtsmittleres Molekulargewicht von 15000 bis 25000 auf. Ihre Schmelzviskosität beträgt vorzugsweise von 10 bis 150 Pas. Diese Viskositätswerte wurden bei 200°C mit einem Meßgerät des Typs MC 10 der Firma Physica in einer Couette-Anordnung mit 0,6 mm Scherspalt bei 21 mm lange und 600 U/min gemessen.

Eine besonders vorteilhafte Haftvermittlung wird erzielt, wenn das erste Material mindestens zu 50 Gew.-% aus mindestens einem Polymeren aus folgender Gruppe besteht: Polyurethane und Copolymerisate, die in polymerisierter Form zu mindestens 90 Gew.-% aus einem der folgenden Monomer-Paare bzw. Monomer-Tripel aufgebaut sind: Butadien-Styrol, Butadien-Acrylnitril, Butadien-Acrylnitril-Styrol, (Meth)acrylsäureester-Styrol, (Meth)acrylsäureester-Vinylacetat, Methacrylsäureester-Acrylsäureester, (Meth)acrylsäureester-Styrol-Acrylnitril, Ethylen-Vinylacetat. Dabei sind die (Meth)acrylsäureester vorzugsweise die Ester von C₁- bis C₈- Alkanolen, insbesondere von n-Butanol, 2-Ethylhexanol, Methanol und Ethanol.

Das Ergebnis ist auch dann vorteilhaft, wenn das erste Material mindestens 5 Gew.-% mindestens einer Polymerverbindung enthält, die mindestens eine Säuregruppe, insbesondere eine Carboxylgruppe, oder eine Amidgruppe enthält. Die Säuregruppen können dabei auch teilweise oder vollständig neutralisiert vorliegen. Geeignete Neutralisationsmittel sind Alkalimetallhydroxide, Amine und insbesondere Ammoniak.

Im Rahmen der vorliegenden Erfindung wird auch ein Verfahren zur Herstellung mehrlagiger Stoffe aus einem ersten Material, einem Haftvermittler und einem zweiten Material bereitgestellt, wobei der Haftvermittler auf eine Fläche des ersten Materials, das zu höchstens 70 Gew.-% aus mindestens einem C₂- bis C₄-Olefin in polymerisierter Form besteht, aufgebracht und die so behandelte Fläche mit dem zweiten Material, das zu mindestens 70 Gew.-% aus mindestens einem C₂- bis C₄-Olefin in polymerisierter Form besteht, in Kontakt gebracht wird. Dabei wird als Haftvermittler ein Copolymerisat verwendet, das in polymerisierter Form besteht aus
a) 70 bis 90 Gew.-% mindestens eines C₂- bis C₄-Olefins und
b) 10 bis 30 Gew.-% mindestens eines Monomeren aus folgender Gruppe: α,β-monoethylenisch ungesättigte C₃- bis C₈- Monocarbonsäuren, α,β-monoethylenisch ungesättigte C₄- bis C₈- Dicarbonsäuren und Anhydride dieser Mono- und Dicarbonsäuren.

Vorzugsweise wird bei dem Verfahren ein Copolymerisat für den Haftvermittler verwendet, bei dem mindestens ein Monomer b) aus folgender Gruppe ausgewählt ist: α,β-monoethylenisch ungesättigte C₃- bis C₅- Monocarbonsäuren, α,β-monoethylenisch ungesättigte C₄- bis C₅- Dicarbonsäuren und Anhydride dieser Mono- und Dicarbonsäuren. Weiter bevorzugt ist ein Monomer b) aus folgender Gruppe ausgewählt: Acrylsäure, Maleinsäure und deren Anhydrid. Besonders bevorzugte Copolymerisate sind Ethylen-Acrylsäure-Copolymerisate.

Bei einem bevorzugten Verfahren weist das Copolymerisat ein gewichtsmittleres Molekulargewicht von 15000 bis 25000 auf. Das Copolymerisat besitzt vorzugsweise eine Schmelzviskosität von 10 bis 150 Pas, die nach dem oben angegebenen Verfahren bestimmt wurde.

Vorteilhafte Ergebnisse werden bei dem erfindungsgemäßen Verfahren besonders dann erzielt, wenn ein erstes Material verwendet wird, das mindestens zu 50 Gew.-% aus mindestens einem Polymeren aus folgender Gruppe besteht: Polyurethane und Copolymerisate, die in polymerisierter Form zu mindestens 90 Gew.-% aus einem der folgenden Monomer-Paare bzw. Monomer-Tripel aufgebaut sind: Butadien-Styrol, Butadien-Acrylnitril, Butadien-Acrylnitril-Styrol, (Meth)acrylsäureester-Styrol, (Meth)acrylsäureester-Vinylacetat, Methacrylsäureester-Acrylsäureester, (Meth)acrylsäureester-Styrol-Acrylnitril, Ethylen-Vinylacetat. Dabei sind die (Meth)acrylsäureester vorzugsweise die Ester von C₁- bis C₈- Alkanolen, insbesondere von n-Butanol, 2-Ethylhexanol, Methanol und Ethanol.

Das Ergebnis des Verfahrens ist auch dann vorteilhaft, wenn das erste Material mindestens 5 Gew.-% mindestens einer Polymerverbindung enthält, die mindestens eine Säuregruppe, insbesondere eine Carboxylgruppe, oder eine Amidgruppe enthält. Die Säuregruppen können dabei auch teilweise oder vollständig neutralisiert vorliegen. Geeignete Neutralisationsmittel sind Alkalimetallhydroxide, Amine und insbesondere Ammoniak.

Bevorzugt ist ein Verfahren, bei dem der Haftvermittler als niedrigschmelzendes Pulver oder als wäßrige Polymerdispersion aufgetragen wird. Die Herstellung entsprechender wäßriger Polymerdispersionen ist bekannt und in EP 024 034, DE 34 20 168 und US 4,613,679 beschrieben. Bevorzugt ist der Auftrag des Haftvermittlers in einer Einsatzmenge von 0,1 bis 1000 g/m², vorzugsweise von 20 bis 50 g/m². Die Angaben der Auftragsgewichte beziehen sich dabei auf das Trockengewicht des Auftrags. Der Auftrag auf das textile Substrat kann durch Aufsprühen, Schaumauftrag, Pflatschen, Rakeln oder Drucken erfolgen.

Mit vorliegender Erfindung wird insbesondere ein Verfahren zur Verfügung gestellt, bei dem ein mit einem Erstrücken (erstes Material, Vorstrich) versehenes textiles Trägermaterial, insbesondere ein Teppich, mittels eines der beschriebenen Haftvermittler mit einem insbesondere textilen Zweitrücken verbunden wird. Dabei ist entweder der Polyolefin-haltige Zweitrücken selbst das zweite Material, oder es wird eine Polyethylen-, Polypropylen-, Ethylen-Propylen-Dien-Mischpolymerisat-Schicht oder eine ähnliche stark Polyolefinhaltige Schicht auf dem Zweitrücken aufgebracht. Der Vorstrich besteht aus den üblichen Polymerdispersionen, z.B. aus Butadien-Styrol-Copolymeren und den anderen oben genannten bevorzugten ersten Materialien. Der Vorstrich wird üblicherweise als wäßrige Dispersion, gegebenenfalls mit Füllstoffen wie Kreide, Aluminiumtrihydrat oder Bariumsulfat gefüllt, aufgebracht. Der Vorstrich kann auch Antistatika und weitere Flammschutzmittel enthalten, wie z.B. Phosphorsäureesterderivate und Salze niederer Carbonsäuren mit hygroskopischen Eigenschaften.

Erfindungsgemäß wird auch ein Bodenbelag mit einer Schicht eines ersten Materials und einer Schicht eines zweiten Materials, die mittels eines Haftvermittlers miteinander verbunden sind, bereitgestellt, wobei das erste Material höchstens zu 70 Gew.-% aus mindestens einem C₂- bis C₄-Olefin in polymerisierter Form und das zweite Material mindestens zu 70 Gew.-% aus mindestens einem C₂- bis C₄-Olefin in polymerisierter Form besteht. Dabei ist der Haftvermittler ein Copolymerisat, das in polymerisierter Form besteht aus
a) 70 bis 90 Gew.-% mindestens eines C₂- bis C₄-Olefins und
b) 10 bis 30 Gew.-% mindestens eines Monomeren aus folgender Gruppe: α,β-monoethylenisch ungesättigte C₃- bis C₈- Monocarbonsäuren, α,β-monoethylenisch ungesättigte C₄- bis C₈- Dicarbonsäuren und Anhydride dieser Mono- und Dicarbonsäuren.

Bevorzugt ist ein Bodenbelag, bei dem der verwendete Haftvermittler mindestens ein Monomer b) aufweist, das aus folgender Gruppe ausgewählt ist: α,β-monoethylenisch ungesättigte C₃- bis C₅- Monoearbonsäuren, α,β-monoethylenisch ungesättigte C₄- bis C₅- Dicarbonsäuren und Anhydride dieser Mono- und Dicarbonsäuren. Weiter bevorzugt ist ein Monomer b) aus folgender Gruppe ausgewählt: Acrylsäure, Maleinsäure und deren Anhydrid. Besonders bevorzugte Copolymerisate sind Ethylen-Acrylsäure-Copolymerisate.

Vorzugsweise weist das als Haftvermittler verwendete Copolymerisat ein gewichtsmittleres Molekulargewicht von 15000 bis 25000 auf. Dieses Copolymerisat weist vorzugsweise eine Schmelzviskosität von 10 bis 150 Pas auf, gemessen in der oben beschriebenen Weise.

Besondere Vorteile hinsichtlich der Haftung der beiden Materialien aneinander bietet ein Bodenbelag, dessen erstes Material mindestens zu 50 Gew.-% aus mindestens einem Polymeren aus folgender Gruppe besteht: Polyurethane und Copolymerisate, die in polymerisierter Form zu mindestens 90 Gew.-% aus einem der folgenden Monomer-Paare bzw. Monomer-Tripel aufgebaut sind: Butadien-Styrol, Butadien-Acrylnitril, Butadien-Acrylnitril-Styrol, (Meth)acrylsäureester-Styrol, (Meth)acrylsäureester-Vinylacetat, Methacrylsäureester-Acrylsäureester, (Meth)acrylsäureester-Styrol-Acrylnitril, Ethylen-Vinylacetat. Dabei sind die (Meth)acrylsäureester vorzugsweise die Ester von C₁- bis C₈- Alkanolen, insbesondere von n-Butanol, 2-Ethylhexanol, Methanol und Ethanol.

Besonders vorteilhaft ist auch ein Bodenbelag mit einem ersten Material, das mindestens 5 Gew.-% mindestens einer Polymerverbindung enthält, die mindestens eine Säuregruppe, insbesondere eine Carboxylgruppe, oder eine Amidgruppe enthält. Die Säuregruppen können dabei auch teilweise oder vollständig neutralisiert vorliegen. Geeignete Neutralisationsmittel sind Alkalimetallhydroxide, Amine und insbesondere Ammoniak.

Im Rahmen der Erfindung ganz besonders bevorzugt ist ein Bodenbelag, bei dem ein Tufting-Teppich-Trägermaterial mit einem Erstrücken mittels eines der beschriebenen Haltvermittler mit einem, insbesondere textilen Zweitrücken verbunden ist.

### Beispiele:

Zunächst wurde auf mit Polyamidfasern getuftete Trägermaterialien aus Polyester-Spinnvlies jeweils ein Vorstrich (erstes Material) einer bekannten wäßrigen, meist carboxylierten Polymerdispersion, gegebenenfalls mit Füllstoffen, zur Verfestigung aufgebracht. Anschließend wurden die so behandelten Trägermaterialien bei 130°C in einem Labortrockenschrank getrocknet. Auf den Vorstrich wurde ein Polyethylen-Pulver, hier Lupolen® 2410 T Q 276, in einer Menge von etwa 250 g/m² aufgestreut (zweites Material).

Das Rohwarengewicht der getufteten Trägermaterialien betrug etwa 1000 g/m², das Auftragsgewicht des Vorstrichs betrug in der Regel etwa 800 g/m² trocken (vgl. Tabelle I). Der Vorstrich enthielt als Füllstoff Kreide oder Aluminiumtrihydrat (vgl. Tabelle I).

Zur Herstellung von Vergleichsbeispielen nach dem Stand der Technik wurde nach dem Erhitzen dieses Pulvers mit einem Infrarot-Strahler ein textiler Rücken, in der Regel ein Polyester-Nadelvlies, als Unterschicht aufkaschiert.

Bei den erfindungsgemäßen Beispielen wurde vor der Aufbringung der Polyethylenschicht Poligen® WE 3 als Haftvermittler auf den Vorstrich in einer Menge von 25 g/m² trocken aufgeschäumt und bei 130°C getrocknet. Poligen® WE 3 ist eine wäßrige Dispersion aus Ethylen-Acrylsäure-Copolymeren. Diese wäßrige Dispersion weist eine Viskosität zwischen 15 und 60 s nach DIN 53211 auf.

Schließlich wurde die Trennfestigkeit zwischen Vorstrich und dem auf dem textilen Rücken fest haftenden Polyethylen ermittelt. Die Trennfestigkeit wurde bei 23 °C und 50% relativer Luftfeuchtigkeit mit einer Zugprüfmaschine der Firma Zwick (Ulm, Deutschland) vom Typ 1425 ermittelt. Die Ergebnisse sind in Tabelle I dargestellt.

**Tabelle I**

| Nr. | Vorstrich (in g/m² trocken) auf Tuftingrohware (1000 g/m²) | Füllstoff im Vorstrich, Art und Menge (in % bezogen auf Gewicht an Polymeren im Vorstrich) | Polyolefinschicht Kaschierschicht PE-LD-Plv. | textiler Rücken | Trennfestigkeit trocken/quer N/5 cm | |
|---|---|---|---|---|---|---|
| | | | | | ohne Haftvermittler | **mit Haftvermittler** Poligen WE3 25 g/m² trocken |
| 1 | Butadien-Styrol Styrofan®LD 417 800 g/m² | Aluminiumtrihydrat (= ATH) 300% | Lupolen®2410 T Q 276 Pulver 250 g/m² | Polyester-Nadelvlies | 16 | > 100 |
| 2 | Butadien-Styrol Styrofan®LD 417 800 g/m² | Kreide W 12 300% | " | " | 28 | > 100 |
| 3 | Butadien-Styrol Styrofan®LD 417 800 g/m² | ATH 300% | " | Malimo-Nähwirkvlies 100% Polypropylen | 9 | > 100 |
| 4 | Butadien-Styrol Styrofan®LD 417 300 g/m² | ohne | " | Polyester-Nadelvlies | 20 | > 100 |
| 5 | Butylacrylat-Styrol-Acrylnitril Acronal®S 360 D 800 g/m² | ATH 300% | " | Polyester-Nadelvlies | 15 | > 100 |
| 6 | Butadien-Acrylnitril Butofan®440 D 800 g/m² | ATH 300% | " | Polyester-Nadelvlies | 23 | > 100 |
| 7 | Butylacrylat-Vinylacetat Acronal®500 D 800 g/m² | ATH 300% | " | Polyester-Nadelvlies | 19 | > 100 |
| 8 | Methylmethacrylat-Butylacrylat Acronal®18 D 800 g/m² | ATH 300% | " | Polyester-Nadelvlies | 28 | > 100 |
| 9 | Polyurethan Emuldur®DS 2299 800 g/m² | ohne | " | Polyester-Nadelvlies | 21 | > 100 |
| 10 | Ethylen-Vinylacetat 800 g/m² | ATH 300% | " | Polyester-Nadelvlies | 13 | > 100 |

Während bei den Vergleichsproben ohne Haftvermittler die textile Rückenschicht mit der daran fest haftenden Polyethylen-Schicht von dem Vorstrich und dem damit fest verbundenen getufteten Trägermaterial je nach Art der verwendeten Vorstrich-Dispersion mit Flächenkräften von rund 10 bis 30 N/5cm abgelöst werden konnten, waren die Ablöseversuche bei erfindungsgemäß hergestellten Tufting-Teppichen bei Raumtemperatur erfolglos. Bei höheren Kräften riß der Textilrücken aus.

## Patentansprüche

1. Verwendung eines Copolymerisats, das in polymerisierter Form besteht aus
a) 70 bis 90 Gew.-% mindestens eines C₂- bis C₄-Olefins und
b) 10 bis 30 Gew.-% mindestens eines Monomeren aus folgender Gruppe: α,β-monoethylenisch ungesättigte C₃- bis C₈-, vorzugsweise C₃-bis C₅-Monocarbonsäuren, α,β-monoethylenisch ungesättigte C₄- bis C₈-, vorzugsweise C₄- C₅-Dicarbonsäuren und Anhydride dieser Mono- und Dicarbonsäuren,
als Haftvermittler zwischen einem ersten und einem zweiten Material, wobei
das erste Material höchstens zu 70 Gew.-% aus mindestens einem C₂- bis C₄-Olefin in polymerisierter Form und
das zweite Material mindestens zu 70 Gew.-% aus mindestens einem C₂- bis C₄-Olefin in polymerisierter Form besteht.

2. Verwendung nach Anspruch 1, gekennzeichnet durch mindestens ein Monomer b) aus folgender Gruppe: Acrylsäure, Maleinsäure und deren Anhydrid, wobei vorzugsweise das Copolymerisat ein Ethylen-Acrylsäure-Copolymerisat ist.

3. Verwendung nach einem der Ansprüche 1 oder 2, gekennzeichnet durch ein erstes Material, das zu mindestens 50 Gew.-% aus mindestens einem Polymeren aus folgender Gruppe besteht: Polyurethane und Copolymerisate, die in polymerisierter Form zu mindestens 90 Gew.-% aus einem der folgenden Monomer-Paare bzw. Monomer-Tripel aufgebaut sind: Butadien-Styrol, Butadien-Acrylnitril, Butadien-Acrylnitril-Styrol, (Meth)acrylsäureester-Styrol, (Meth)acrylsäureester-Vinylacetat, Methacrylsäureester-Acrylsäureester, (Meth)acrylsäureester-Sryrol-Acrylnitril, Ethylen-Vinylacetat, wobei die (Meth)acrylsäureester vorzugsweise die Ester von C₁- bis C₈- Alkanolen, insbesondere von n-Butanol, 2-Ethylhexanol, Methanol und Ethanol sind, oder gekennzeichnet durch ein erstes Material, das mindestens 5 Gew.-% mindestens einer Polymerverbindung enthält, die mindestens eine Säuregruppe, insbesondere eine Carboxylgruppe, oder eine Amidgruppe aufweist.

4. Verfahren zur Herstellung mehrlagiger Stoffe aus einem ersten Material, einem Haftvermittler und einem zweiten Material, wobei
der Haftvermittler auf eine Fläche des ersten Materials, das zu höchstens 70 Gew.-% aus mindestens einem C₂- bis C₄-Olefin in polymerisierter Form besteht, aufgebracht und die so behandelte Fläche mit dem zweiten Material, das zu mindestens 70 Gew.-% aus mindestens einem C₂- bis C₄-Olefin in polymerisierter Form besteht, in Kontakt gebracht wird,
dadurch gekennzeichnet, daß
als Haftvermittler ein Copolymerisat verwendet wird, das in polymerisierter Form aus
a) 70 bis 90 Gew.-% mindestens eines C₂- bis C₄-Olefins und
b) 10 bis 30 Gew.-% mindestens eines Monomeren aus folgender Gruppe: α,β-monoethylenisch ungesättigte C₃- bis C₈-, vorzugsweise C₃- bis C₅-Monocarbonsäuren, α,β-monoethylenisch ungesättigte C₄- bis C₈-, vorzugsweise C₄- bis C₅-Dicarbonsäuren und Anhydride dieser Mono- und Dicarbonsäuren,
besteht.

5. Verfahren nach Anspruch 4, gekennzeichnet durch mindestens ein Monomer b) aus folgender Gruppe: Acrylsäure, Maleinsäure und deren Anhydrid, wobei vorzugsweise das Copolymerisat ein Ethylen-Acrylsäure-Copolymerisat ist.

6. Verfahren nach einem der Ansprüche 4 oder 5, gekennzeichnet durch ein erstes Material, das zu mindestens 50 Gew.-% aus mindestens einem Polymeren aus folgender Gruppe besteht: Polyurethane und Copolymerisate, die in polymerisierter Form zu mindestens 90 Gew.-% aus einem der folgenden Monomer-Paare bzw. Monomer-Tripel aufgebaut sind: Butadien-Styrol, Butadien-Acrylnitril, Butadien-Acrylnitril-Styrol, (Meth)acrylsäureester-Styrol, (Meth)acrylsäureester-Vinylacetat, Methacrylsäureester-Acrylsäureester, (Meth)acrylsäureester-Styrol-Acrylnitril, Ethylen-Vinylacetat, wobei die (Meth)acrylsäureester vorzugsweise die Ester von C₁- bis C₈- Alkanolen, insbesondere von n-Butanol, 2-Ethylhexanol, Methanol und Ethanol sind, oder gekennzeichnet durch ein erstes Material, das mindestens 5 Gew.-% mindestens einer Polymerverbindung enthält, die mindestens eine Säuregruppe, insbesondere eine Carboxylgruppe, oder eine Amidgruppe aufweist.

7. Verfahren nach einem der Ansprüche 4 bis 6, dadurch gekennzeichnet, daß der Haftvermittler als niedrigschmelzendes Pulver oder als wäßrige Polymerdispersion aufgetragen wird, und/oder daß der Haftvermittler in einer Einsatzmenge von 0,1 bis 1000 g/m², vorzugsweise von 20 bis 50 g/m², bezogen auf das Trockengewicht, aufgetragen wird, und/oder daß ein mit einem Erstrücken versehenes textiles Trägermaterial, insbesondere ein Teppich, mittels eines der beschriebenen Haftvermittler mit einem insbesondere textilen Zweitrücken verbunden wird.

8. Bodenbelag mit einer Schicht eines ersten Materials und einer Schicht eines zweiten Materials, die mittels eines Haftvermittlers miteinander verbunden sind, wobei
das erste Material höchstens zu 70 Gew.-% aus mindestens einem C₂- bis C₄-Olefin in polymerisierter Form und
das zweite Material mindestens zu 70 Gew.-% aus mindestens einem C₂- bis C₄-Olefin in polymerisierter Form besteht,
dadurch gekennzeichnet, daß
der Haftvermittler ein Copolymerisat ist, das in polymerisierter Form besteht aus
a) 70 bis 90 Gew.-% mindestens eines C₂- bis C₄-Olefins und
b) 10 bis 30 Gew.-% mindestens eines Monomeren aus folgender Gruppe: α,β-monoethylenisch ungesättigte C₃- bis C₈-, vorzugsweise C₄- bis C₅-Monocarbonsäuren, α,β-monoethylenisch ungesättigte C₄- bis C₈-, vorzugsweise C₄- bis C₅-Dicarbonsäuren und Anhydride dieser Mono- und Dicarbonsäuren.

9. Bodenbelag nach Anspruch 8, gekennzeichnet durch mindestens ein Monomer b) aus folgender Gruppe: Acrylsäure, Maleinsäure und deren Anhydrid, wobei vorzugsweise das Copolymerisat ein Ethylen-Acrylsäure-Copolymerisat ist.

10. Bodenbelag nach einem der Ansprüche 8 oder 9, gekennzeichnet durch ein erstes Material, das zu mindestens 50 Gew.-% aus mindestens einem Polymeren aus folgender Gruppe besteht: Polyurethane und Copolymerisate, die in polymerisierter Form zu mindestens 90 Gew.-% aus einem der folgenden Monomer-Paare bzw. Monomer-Tripel aufgebaut sind: Butadien-Styrol, Butadien-Acrylnitril, Butadien-Acrylnitril-Styrol, (Meth)acrylsäureester-Styrol, (Meth)acrylsäureester-Vinylacetat, Methacrylsäureester-Acrylsäureester, (Meth)acrylsäureester-Styrol-Acrylnitril, Ethylen-Vinylacetat, wobei die (Meth)acrylsäureester vorzugsweise die Ester von C₁- bis C₈- Alkanolen, insbesondere von n-Butanol, 2-Ethylhexanol, Methanol und Ethanol sind, oder gekennzeichnet durch ein erstes Material, das mindestens 5 Gew.-% mindestens einer Polymerverbindung enthält, die mindestens eine Säuregruppe, insbesondere eine Carboxylgruppe, oder eine Amidgruppe aufweist, und/oder dadurch gekennzeichnet, daß ein Tufting-Teppich-Trägermaterial mit einem Erstrücken mittels eines der beschriebenen Haftvermittler mit einem, insbesondere textilen Zweitrücken verbunden ist.
